(19) Europäisches Patentamt
European Patent Office
Office européen des brevets

(11) **EP 1 871 001 A1**

(12) **EUROPEAN PATENT APPLICATION**
published in accordance with Art. 153(4) EPC

(43) Date of publication:
**26.12.2007 Bulletin 2007/52**

(51) Int Cl.:
*H02P 6/08* (2006.01)　　*B62D 5/04* (2006.01)

(21) Application number: **06731627.3**

(22) Date of filing: **11.04.2006**

(86) International application number:
**PCT/JP2006/307680**

(87) International publication number:
**WO 2006/109809 (19.10.2006 Gazette 2006/42)**

(84) Designated Contracting States:
**DE FR GB**

(30) Priority: **12.04.2005  JP  2005115038**

(71) Applicant: **JTEKT Corporation
Osaka-shi
Osaka 542-8502 (JP)**

(72) Inventor: **SAKAMAKI, Masahiko
c/o JTEKT CORPORATION
Osaka-shi 542-8502 (JP)**

(74) Representative: **Hager, Thomas Johannes
Hoefer & Partner
Patentanwälte
Pilgersheimer Straße 20
D-81543 München (DE)**

(54) **ELECTRIC POWER STEERING SYSTEM**

(57) The electric power steering system detects a steering torque Ts applied to a steering member (not shown), determines a q-axis current i*q and a d-axis current i*d of a motor in dq coordinates, on the basis of the detected steering torque Ts, determines a q-axis voltage V*q and a d-axis voltage V*d, on the basis of a power supply voltage Ed, such that the determined q-axis current i*q and d-axis current i*d flow through the motor, converts the q-axis voltage V*q and the d-axis voltage V*d into three-phase voltages V*u, V*v, and V*w, and applies the three-phase voltages V*u, V*v, and V*w to drive the motor, thereby assisting steering. The electric power steering system includes a limiter unit which limits the q-axis voltage V*q to be smaller than

$$\sqrt{3n^2 Ed^2 / 8 - Vd^2}$$  (n = 1, 2, or 2/√3).

EP 1 871 001 A1

**Description**

Background Art

The present invention relates to an electric power steering system which detects steering torque applied to a steering member, determines two-phase currents of a motor in dq coordinates, on the basis of the detected steering torque, determines two-phase voltages, on the basis of a power supply voltage, such that the determined two-phase currents flow through the motor, converts the two-phase voltages into three-phase voltages, and applies the three-phase voltages to drive the motor, thereby assisting steering.

A general electric power steering system which assists steering by driving motor to reduce a user's load includes an input shaft fitted to a steering member (for example, a steering wheel, a handle), an output shaft connected to wheels through, for example, a pinion and a rack, and a connecting shaft for connecting the input shaft to the output shaft. A torque sensor detects steering torque applied to the input shaft on the basis of a torsion angle of the connecting shaft, and the driving of a steering assisting motor connected to the output shaft is controlled on the basis of the detected steering torque value.

In recent years, a brushless DC motor has been used for the electric power steering system. In the brushless DC motor for the electric power steering system, the position of a magnetic pole of a rotary permanent magnet is controlled such that a field current has a sine wave, and three-phase voltages having sine waves are applied to the motor (when the motor rotates at a predetermined speed). It is necessary to set a maximum amplitude value to be smaller than half the power supply voltage Ed in order to limit three-phase voltage command values to have always sine waves. Further, as described in JP-A-2003-304697, it is necessary to set the maximum amplitude value to be smaller than the power supply voltage Ed in order to limit the three-phase voltage command values to have always trapezoidal waves. In addition, it is necessary to set the maximum amplitude to be smaller than $1/\sqrt{3}$ of the power supply voltage Ed in order that third harmonic waves overlap the three-phase voltage command values having sine waves.

When the brushless DC motor is controlled by the sine waves by using dq coordinate transformation, the following coordinate transform equation 1:

$$V*u = \sqrt{(2/3)(V*d\cos\theta re - V*q\sin\theta re)} \, ,$$

$$V* = \sqrt{(2/3)(V*d\cos(\theta re - (2\pi/3)) - V*q\sin(\theta re - (2\pi/3)))} \, ,$$

and

$$V* = -V*u - V*v \qquad (1)$$

(where V*u, V*v, and V*w are u-phase, v-phase, and w-phase voltage command values, V*d and V*q are d-axis and q-axis voltage command values, and θre is an electric angle).

Therefore, the d-axis and q-axis voltage command values need to satisfy the following equation 2:

$$\sqrt{(V*d^2 + V*q^2)} \le Ed\sqrt{3}/2\sqrt{2} \qquad (2) \, .$$

In the related art, limit values Vdmax and Vqmax of the d-axis and q-axis voltage command values are set to be constant for the purpose of a simple process. For example, when the following relationship is established:

$$Vd\max = Vq\max = Ed\sqrt{3}/4 \qquad (3) \, ,$$

the equation 2 is always satisfied.

JP-A-2003-304697 discloses an electronic power steering system including a limiter unit for limiting three-phase voltage command values of the steering assisting brushless motor within the range of -Ed/2 to +Ed/2 (Ed; power supply voltage).

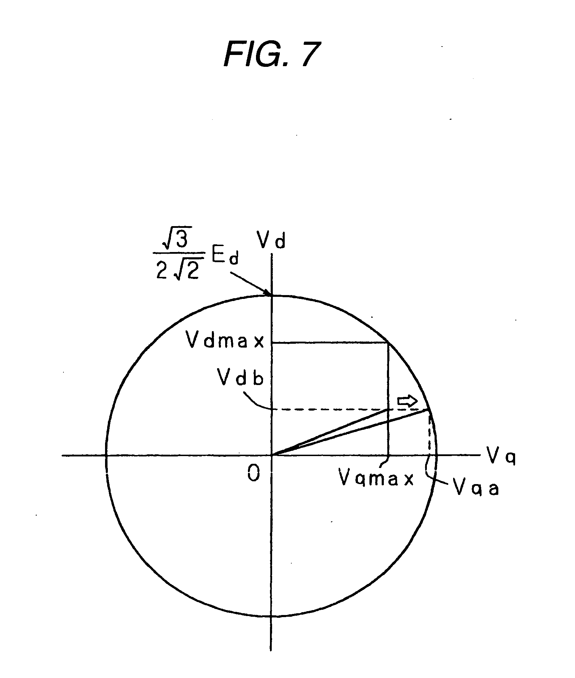

In the related electric power steering system, as described above, the limit values Vdmax and Vqmax of the d-axis and q-axis voltage command values of the brushless DC motor are set to be constant, and are shown in the dq coordinates as shown in Fig. 7. For example, when the d-axis voltage command value is Vdb, it is possible to increase the q-axis voltage command value up to Vqa in the related art. However, in practice, the q-axis voltage command value is limited to be equal to or to be smaller than a q-axis limit value Vqmax. That is, except that the d-axis and q-axis voltage command values have the limit values Vdmax and Vqmax, it is impossible to make the utmost use of the power supply voltage.

SUMMARY OF THE INVENTION

The present invention is made in view of the above-mentioned problem, and it is an object of the invention to provide an electric power steering system capable of making the utmost use of a power supply voltage of a motor.

According to a first aspect of the invention, there is provided an electric power steering system which detects steering torque applied to a steering member, determines a q-axis current and a d-axis current of a motor in dq coordinates, on the basis of the detected steering torque, determines a q-axis voltage Vq and a d-axis voltage Vd, on the basis of a power supply voltage Ed, such that the determined q-axis current and d-axis current flow through the motor, converts the q-axis voltage Vq and the d-axis voltage Vd into three-phase voltages, and applies the three-phase voltages to drive the motor, thereby assisting steering. The electric power steering system includes a limiter unit which limits the q-axis voltage Vq to be equal to or to be smaller than $\sqrt{(3n^2Ed^2/8 - Vd^2)}$ (n = 1, 2, or 2 √3).

According to a second aspect of the invention, in the electric power steering system, preferably, the limiter unit stores a pair of values Vq and Vd for every predetermined angle satisfying $Vq = \sqrt{(3n^2Ed^2/8 - Vd^2)}$ which represents a circle in the dq coordinates, calculates the value Vq by means of linear interpolation, on the basis of the value Vd and the pair of values, and limits the q-axis voltage Vq to be equal to or to be smaller than the calculated value Vq.

As described above, according to the first aspect of the invention, the electric power steering system detects steering torque applied to a steering member, determines a q-axis current and a d-axis current of a motor in dq coordinates, on the basis of the detected steering torque, determines a q-axis voltage Vq and a d-axis voltage Vd, on the basis of a power supply voltage Ed, such that the determined q-axis current and d-axis current flow through the motor, converts the q-axis voltage Vq and the d-axis voltage Vd into three-phase voltages, and applies the three-phase voltages to drive the motor, thereby assisting steering. The electric power steering system includes a limiter unit which limits the q-axis voltage Vq to be equal to or to be smaller than $\sqrt{(3n^2Ed^2/8 - Vd^2)}$ (n = 1, 2, or 2/√3). In this way, it is possible to achieve an electric power steering system capable of making the utmost use of a power supply voltage of a motor.

In the above-mentioned structure, when n = 1, the three-phase voltage command values are limited to have always sine waves. When n = 2, the three-phase voltage command values are limited to have always trapezoidal waves. When n = 2/√3, the three-phase voltage command values are limited such that third harmonic waves overlap sine waves.

According to the second aspect of the invention, in the electric power steering system, the limiter unit stores a pair of values Vq and Vd for every predetermined angle satisfying $Vq = \sqrt{(3n^2Ed^2/8 - Vd^2)}$ which represents a circle in the dq coordinates, calculates the value Vq by means of linear interpolation, on the basis of the value Vd and the pair of values, and limits the q-axis voltage Vq to be equal to or to be smaller than the calculated value Vq. In this way, it is possible to achieve an electric power steering system capable of making the utmost use of a power supply voltage of a motor.

BRIEF DESCRIPTION OF THE DRAWINGS

Fig. 1 is a diagram schematically illustrating the structure of an electric power steering system according to an embodiment of the invention.
Fig. 2 is a block diagram illustrating the structure of main parts of the electric power steering system shown in Fig. 1.
Fig. 3 is a flow chart illustrating an example of the operation of the electric power steering system according to the invention.
Fig. 4 is a diagram illustrating an example of the operation of the electric power steering system according to the invention.

Fig. 5 is a diagram illustrating an example of a characteristic curve of a brushless DC motor used for the electric power steering system.

Fig. 6 is a diagram illustrating another example of the operation of the electric power steering system according to the invention.

Fig. 7 is a diagram illustrating the operation of a conventional electric power steering system.

BEST MODE FOR CARRYING OUT THE INVENTION

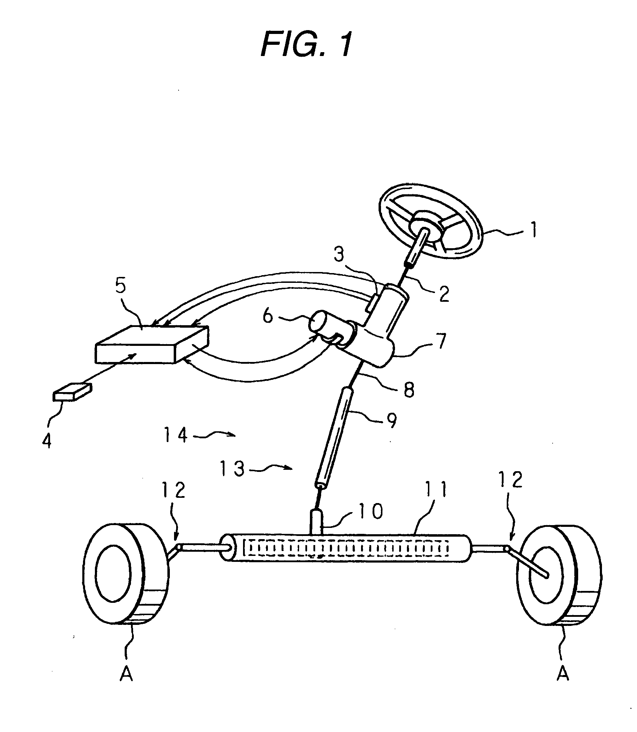

Preferred embodiments of the invention will be described below with reference to the accompanying drawings. Fig. 1 is a schematic diagram showing the configuration of an electric power steering system according to an embodiment of the invention. The electric power steering system includes, for example, a steering wheel 1 (a steering member), a brushless DC motor 6, a steering assisting member, which is driven by the steering wheel 1, a power transmission means 13 for transmitting the rotation of the motor 6 to steering mechanisms 12 through a reduction gear mechanism 7, and an ECU (controller) 5 for controlling the driving of the motor 6. The ECU 5 receives a vehicle speed signal outputted from a vehicle speed sensor 4 for detecting a traveling speed of a vehicle.

The power transmission means 13 includes an output shaft 8 which is connected with an input shaft 2 connected to the steering wheel 1 through a torsion bar (not shown), a connecting shaft 9 which is connected with the output shaft 8 through a universal joint, a pinion shaft 10 which is connected with the connecting shaft 9 through a universal joint, and a rack shaft 11 which has a toothed rack engaged with a pinion fitted to the pinion shaft 10 and which is connected with left and right steering control wheels A through the steering mechanisms 12. A steering shaft 14 is composed of the input shaft 2 and the power transmission means 13.

A torque sensor 3 is disposed near the input shaft 2, and detects steering torque acting on the input shaft 2 due to the rotation of the steering wheel 1 on the basis of the torsion of the torsion bar. The ECU 5 controls the driving of the motor 6 on the basis of the steering torque detected by the torque sensor 3.

The reduction gear mechanism 7 includes a worm connected with an output shaft of the motor 6 and a worm wheel fitted to the output shaft 8, and transmits the rotation of the motor 6 to the output shaft 8 through the worm and the worm wheel.

In the electric power steering system having the above-described structure, steering force generated by the steering wheel 1 is transmitted to the rack shaft 11 through the input shaft 2, the torsion bar (not shown), the output shaft 8, the connecting shaft 9, and the pinion shaft 10 and moves the lack shaft 11 in an axial direction thereof, thereby operating the steering mechanisms 12. At the same time, the ECU 5 controls the driving of the motor 6 on the basis of the steering torque detected by the torque sensor 3 and transmits driving force of the motor to the output shaft 8, thereby assisting steering force. In this way, the steering force of a driver is reduced.

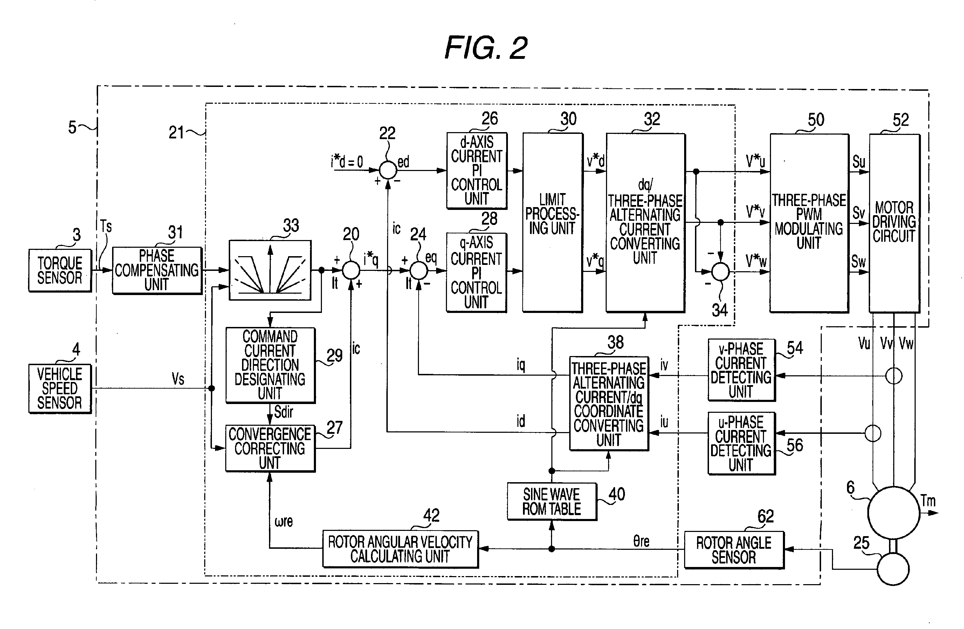

Fig. 2 is a block diagram illustrating the schematic structure of the electric power steering system shown in Fig. 1. In the electric power steering system, a steering torque value Ts detected by the torque sensor 3 is supplied to a phase compensating unit 31 and the phase of the steering torque value is compensated by the phase compensating unit 31. Then, the steering torque value is transmitted to a torque-current table 33 of the ECU 5. A vehicle speed value Vs detected by the vehicle speed sensor 4 is supplied to the torque-current table 33 and a convergence correcting unit 27.

In the torque-current table 33, when the steering torque value exceeds a predetermined insensitive range, a target value of a motor current increases in proportion to an increase in the steering torque value, and a function in which the target value is saturated when the steering torque value is larger than a predetermined value is varied according to the vehicle speed value Vs. The function is set such that, as the vehicle speed value Vs increases, the ratio of the target value of the motor current with respect to the steering torque value becomes small and a saturated value of the target value becomes small. A target value It of the motor current set by the torque-current table 33 is supplied to an adding unit 20 and an command current direction designating unit 29.

The target value It of the motor current is a value with a sign indicating a target value of a d-axis current in motor control using dq coordinate transformation, and the sign of the target value indicates a steering assisting direction. The command current direction designating unit 29 creates a directional signal Sdir indicating the steering assisting direction on the basis of the plus or minus sign of the target value It of the supplied motor current, and supplies the directional signal to the convergence correcting unit 27.

The motor 6, which is a brushless motor for assisting steering, is provided with a positional sensor 25 for detecting the rotational position of a rotor. A positional signal detected by the positional sensor 25 is sent to a rotor angle sensor 62 of the ECU 5 and is then converted into an electric angle $\theta re$. The converted signal is transmitted to a sine wave ROM table 40 and a rotor angular velocity calculating unit 42.

The sine wave ROM table 40 detects a sine wave value $\sin\theta re$ on the basis of the received electric angle $\theta re$ and transmits the detected sine wave value to a three-phase alternating current/dq coordinate converting unit 38 and a dq/three-phase alternating current converting unit 32.

The rotor angular velocity calculating unit 42 calculates a rotor angular velocity $\omega re$ on the basis of the electric

4

angle θre and transmits the calculated value to the convergence correcting unit 27. The convergence correcting unit 27 creates a compensating current value ic for ensuring vehicle convergence on the basis of the vehicle speed value Vs, the directional speed Sdir, and the rotor angular velocity ωre and transmits the compensating current value ic to the adding unit 20.

The adding unit 20 adds the compensating current value ic to the target value It of the motor current, and transmits the added value to a subtracting unit 24 as a q-axis current command value i*q.

A v-phase current detecting unit 54 and a u-phase current detecting unit 56 detects current values iv and iu flowing through a v-phase magnetic coil and a u-phase magnetic coil of the motor 6, respectively, and transmit the detected current values to the three-phase alternating current/dq coordinate converting unit 38.

The three-phase alternating current/dq coordinate converting unit 38 converts the current values iv and iu into a q-axis current value iq and a d-axis current value id on the basis of the received sine wave value sinθre, and transmits the q-axis current value iq and the d-axis current value id to the subtracting units 24 and 22, respectively.

The subtracting unit 24 calculates a difference eq between the q-axis current command value i*q and the q-axis current value iq and transmits the difference eq to a q-axis current PI control unit 28.

The subtracting unit 22 calculates a difference ed between the d-axis current value id and a d-axis current command value i*d, which is zero since it is irrelative to torque, and transmits the difference ed to a d-axis current PI control unit 26.

The q-axis current PI control unit 28 and the d-axis current PI control unit 26 calculate a q-axis voltage Vq and a d-axis voltage Vd for PI control on the basis of the transmitted differences eq and ed, respectively, and transmit the calculated voltages to a limit processing unit 30.

The limit processing unit (limiter unit) 30 transmits the received d-axis voltage Vd to the dq/three-phase alternating current converting unit 32 as a d-axis voltage command value V*d. In addition, the limit processing unit 30 creates a q-axis voltage command value V*q for limiting the q-axis voltage Vq to be equal to or to be smaller than

$$\sqrt{\left(3Ed^2/8 - Vd^2\right)}$$ (Ed; a power supply voltage) so that three-phase voltage command values having sine waves are always obtained, and transmits the created value to the dq/three-phase alternating current converting unit 32.

The dq/three-phase alternating current converting unit 32 performs dq reverse conversion (three-phase conversion), on the basis of the received q-axis voltage command value V*q and the d-axis voltage command value V*d, to calculate a u-phase voltage command value V*u and a v-phase voltage command value V*v, and transmits the calculated values to a subtracting unit 34 and a three-phase PWM modulating unit 50, respectively.

The subtracting unit 34 calculates V*w = -V*u - V*v and transmits the obtained w-phase voltage command value V*w to the three-phase modulating unit 50.

The three-phase PWM modulating unit 50 modulates the pulse widths of the received three-phase voltage command values V*u, V*v, and V*w into three-phase PWM signals Su, Sv, and Sw, and transmits the modulated signals to a motor driving circuit 52.

The motor driving circuit 52 performs switching between three-phase magnetic coils (not shown) and a power supply and a ground terminal on the basis of the received PWM signals Su, Sv, and Sw (pulse signals) to drive the motor 6 in the PWM driving manner. Then, the motor 6 outputs torque Tm.

Further, a micro computer 21 performs the functions of the torque-current table 33, the convergence correcting unit 27, the adding unit 20, the command current direction designating unit 29, the rotor angular velocity calculating unit 42, the sine wave ROM table 40, the three-phase alternating current/dq coordinate converting unit 38, the dq/three-phase alternating current converting unit 32, the subtracting unit 24, the subtracting unit 22, the q-axis current PI control unit 28, the d-axis current PI control unit 26, the limit processing unit 30, and the subtracting unit 34.

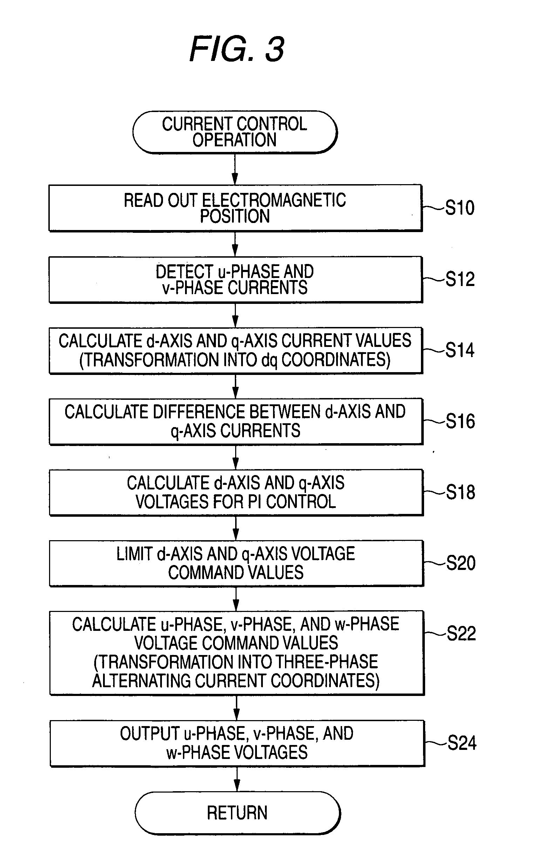

Next, a current control operation by the electric power steering system having the above-mentioned structure will be described with reference to a flow chart shown in Fig. 3.

The ECU 5 reads out a magnetic positional signal detected and output by the positional sensor 25 and controls the rotor angle sensor 62 to calculate the electric angle θre and the sine wave ROM table 40 to output the sine wave value sinθre on the basis of the electric angle θre (S10). Meanwhile, the ECU 5 controls v-phase current detecting unit 54 and the u-phase current detecting unit 56 to detect the current values iv and iu flowing through the v-phase magnetic coil and the v-phase magnetic coil of the motor 6, respectively (S12).

Next, the ECU 5 controls the three-phase alternating current/dq coordinate converting unit 38 converts the current values iv and iu into the q-axis current value iq and the d-axis current value id on the basis of the sine wave value sinθre (S14).

Then, the ECU 5 controls the subtracting unit 24 to calculate the difference eq between the q-axis current command value i*q and the q-axis current value iq and the subtracting unit 22 to calculate the difference ed between the d-axis current command value i*d, which is zero, and the d-axis current value id (S16). Subsequently, the ECU 5 controls the q-axis current PI control unit 28 and the d-axis current PI control unit 26 to calculate the q-axis voltage Vq and the d-axis voltage Vd for PI control on the basis of the differences eq and ed, respectively (S18).

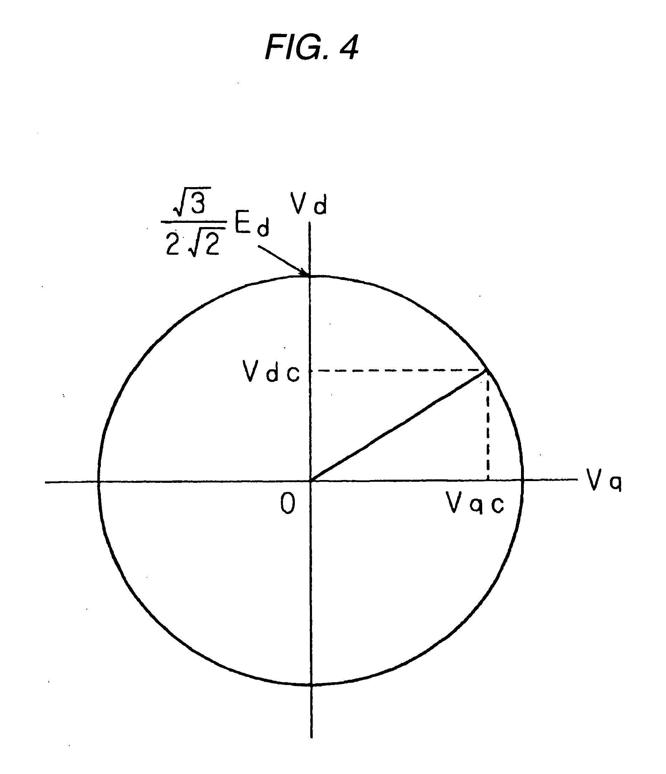

Next, the ECU 5 controls the limit processing unit 30 to set the d-axis voltage Vd to the d-axis voltage command value V*d and to create the q-axis voltage command value V*q for limiting the q-axis voltage Vq to be equal to or to be smaller than $\sqrt{\dfrac{3Ed^2}{8} - Vd^2}$ (Ed; a power supply voltage) so that three-phase voltage command values having sine waves are always obtained (S20). In this way, as shown in Fig. 4, when the d-axis voltage command value is Vdc, it is possible to obtain a q-axis voltage command value Vqc capable of making the utmost use of a power supply voltage represented by the following expression 2:

$$\sqrt{\left(V*d^2 + V*q^2\right)} \le \frac{Ed\sqrt{3}}{2\sqrt{2}} \qquad (2).$$

Then, the ECU 5 controls the dq/three-phase alternating current converting unit 32 and the subtracting unit 34 to perform reverse dq conversion (three-phase conversion), on the basis of the q-axis voltage command value V*q and the d-axis voltage command value V*d, to calculate the u-phase voltage command value V*u, the v-phase voltage command value V*v, and the v-phase voltage command value V*w (S22). Subsequently, the ECU 5 controls the three-phase PWM modulating unit 50 to modulate the pulse widths of the three-phase voltage command values V*u, V*v, and V*w into the PWM signals Su, Sv, and Sw, and controls the motor driving circuit 52 to perform switching between the three-phase magnetic coils and the power supply and the ground terminal, on the basis of the PWM signals Su, Sv, and Sw, to output three-phase voltages (S24). The motor 6 is driven by the output three-phase voltages.

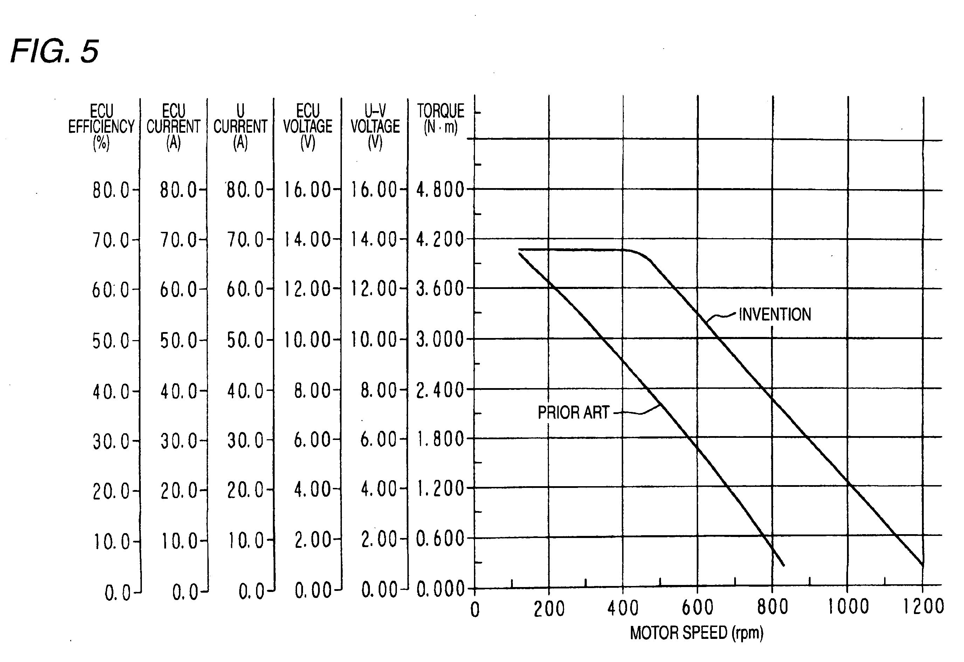

Fig. 5 is a diagram illustrating an example of a characteristic curve of the brushless DC motor 6. Fig. 5 shows a comparison between a case in which the d-axis voltage command value V*d and the q-axis voltage command value V*q are limited as in the related art and a case in which these values are limited as in the present invention. In a case in which these values are limited as in the present invention, a current flowing through the motor and a voltage applied to the motor are larger than those in the related art when the motor rotates at the same speed, which results in an increase in output torque and an improvement in efficiency.

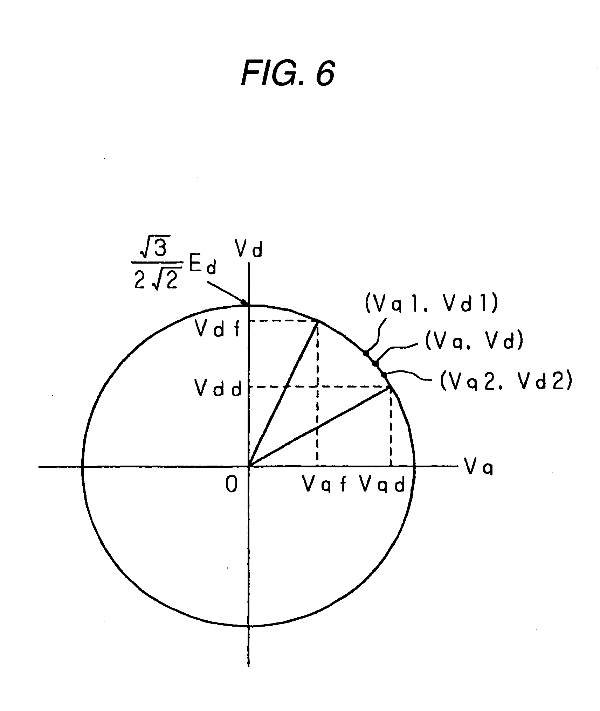

The limit processing unit 30 stores a pair of values Vq and Vd for every 10° satisfying $Vq = \sqrt{\left(3Ed^2/8 - Vd^2\right)}$ which represents a circle in dq coordinates, and calculates the value Vq by means of linear interpolation on the basis of the value vd and the stored pair of values. Then, the limit processing unit 30 limits the q-axis voltage Vq to be equal to or to be smaller than the calculated value Vq, which makes it possible to reduce a calculating load.
For example, as shown in Fig. 6, pairs of coordinates (Vq1, Vd1) and (Vq2, Vd2) of values vd1 and Vd2, which are respectively larger and smaller than the value Vd, are used to calculate the following equation:

$$Vq = (Vq2 - Vq1)(Vd - Vd1)/(Vd2 - Vd1) + Vq1.$$

Then, linear interpolation is performed thereon.
In this case, for example, in Fig. 6, when the d-axis voltage command value V*d and the q-axis voltage command value V*q correspond to the stored pairs of values corresponding to any one of the electric angles 5°, 15°, 25°, ..., 85°, for example, a pair of value (Vqf, Vdf), the usage efficiency of the power supply voltage is 100%. Even when the d-axis voltage command value V*d and the q-axis voltage command value V*q correspond to, for example, a pair of value (Vqd, Vdd) corresponding to any one of the electric angles 0°, 10°, 20°, ..., 90° where the usage efficiency of the power supply voltage is lowest, it is possible to theoretically obtain 99.6 percent of the usage efficiency of the power supply voltage from cos5°.
In the above-described first embodiment, the maximum amplitude value is limited such that the three-phase voltage command values have always sine waves (n = 1). However, the maximum amplitude value may be limited such that the three-phase voltage command values have always trapezoidal waves (n = 2). Alternatively, the maximum amplitude may be limited such that third harmonic waves overlap the three-phase voltage command values having sine waves (n = 2/√3).

**Claims**

1.   An electric power steering system for assisting a steering by driving a motor, the electric power steering system comprising:

a torque sensor for detecting steering torque applied to a steering member;
a current determining unit for determining a q-axis current and a d-axis current of the motor in dq coordinates on the basis of the steering torque detected by the torque sensor;
a voltage determining unit for determining a q-axis voltage Vq and a d-axis voltage Vd such that the q-axis current and the d-axis current determined by the current determining unit flow through the motor;
a limiter unit for limiting the q-axis voltage Vq so as to satisfy the following equation:

$$Vq \leq \sqrt{\frac{3n^2 Ed^2}{8} - Vd^2} \quad (n = 1, 2, \text{ or } 2/\sqrt{3});$$

a converter unit for converting the q-axis voltage Vq limited by the limiter unit and the d-axis voltage Vd determined by the voltage determining unit into three-phase voltages; and
a driving unit for driving the motor on the basis of the three-phase voltages.

2. The electric power steering system according to claim 1, wherein the limiter unit stores a pair of values Vq and Vd for every predetermined angle satisfying $Vq = \sqrt{\left(3n^2 Ed^2/8 - Vd^2\right)}$, which represents a circle in the dq coordinates, calculates the value Vq by linear interpolation on the basis of the value Vd and the pair of values, and limits the q-axis voltage vq to be smaller than the calculated value Vq.

# FIG. 1

# FIG. 2

The figure is a block diagram of a motor control system including: TORQUE SENSOR (3), VEHICLE SPEED SENSOR (4), PHASE COMPENSATING UNIT (31), COMMAND CURRENT DIRECTION DESIGNATING UNIT (29), CONVERGENCE CORRECTING UNIT (27), d-AXIS CURRENT PI CONTROL UNIT (26), q-AXIS CURRENT PI CONTROL UNIT (28), LIMIT PROCESSING UNIT (30), dq/THREE-PHASE ALTERNATING CURRENT CONVERTING UNIT (32), THREE-PHASE PWM MODULATING UNIT (50), MOTOR DRIVING CIRCUIT (52), THREE-PHASE ALTERNATING CURRENT/dq COORDINATE CONVERTING UNIT (38), v-PHASE CURRENT DETECTING UNIT (54), u-PHASE CURRENT DETECTING UNIT (56), SINE WAVE ROM TABLE (40), ROTOR ANGULAR VELOCITY CALCULATING UNIT (42), ROTOR ANGLE SENSOR (62). Signal labels include Ts, Vs, i*d = 0, ed, v*d, v*u, Su, ic, i*q, It, eq, v*q, v*v, Sv, v*w, Sw, iq, iv, id, iu, Sdir, ωre, θre, Vu, Vv, Vw, Tm. Block references: 5, 21, 22, 24, 20, 33, 34, 6, 25.

EP 1 871 001 A1

# FIG. 3

```
        ┌─────────────────────────┐
        │    CURRENT CONTROL       │
        │      OPERATION           │
        └─────────────────────────┘
                     │
                     ▼
        ┌─────────────────────────┐
        │  READ OUT ELECTROMAGNETIC│──S10
        │        POSITION          │
        └─────────────────────────┘
                     │
                     ▼
        ┌─────────────────────────┐
        │    DETECT u-PHASE AND    │──S12
        │    v-PHASE CURRENTS      │
        └─────────────────────────┘
                     │
                     ▼
        ┌──────────────────────────────────┐
        │ CALCULATE d-AXIS AND q-AXIS       │──S14
        │   CURRENT VALUES                  │
        │ (TRANSFORMATION INTO dq           │
        │   COORDINATES)                    │
        └──────────────────────────────────┘
                     │
                     ▼
        ┌──────────────────────────────────┐
        │ CALCULATE DIFFERENCE BETWEEN      │──S16
        │   d-AXIS AND q-AXIS CURRENTS      │
        └──────────────────────────────────┘
                     │
                     ▼
        ┌──────────────────────────────────┐
        │   CALCULATE d-AXIS AND q-AXIS     │──S18
        │   VOLTAGES FOR PI CONTROL         │
        └──────────────────────────────────┘
                     │
                     ▼
        ┌──────────────────────────────────┐
        │  LIMIT d-AXIS AND q-AXIS VOLTAGE  │──S20
        │     COMMAND VALUES                │
        └──────────────────────────────────┘
                     │
                     ▼
        ┌──────────────────────────────────┐
        │ CALCULATE u-PHASE, v-PHASE, AND   │──S22
        │   w-PHASE VOLTAGE COMMAND VALUES  │
        │ (TRANSFORMATION INTO THREE-PHASE  │
        │   ALTERNATING CURRENT COORDINATES)│
        └──────────────────────────────────┘
                     │
                     ▼
        ┌──────────────────────────────────┐
        │   OUTPUT u-PHASE, v-PHASE, AND    │──S24
        │     w-PHASE VOLTAGES              │
        └──────────────────────────────────┘
                     │
                     ▼
        ┌─────────────────────────┐
        │        RETURN            │
        └─────────────────────────┘
```

# FIG. 4

## FIG. 5

| ECU EFFICIENCY (%) | ECU CURRENT (A) | U CURRENT (A) | ECU VOLTAGE (V) | U-V VOLTAGE (V) | TORQUE (N·m) |
|---|---|---|---|---|---|
| 80.0 | 80.0 | 80.0 | 16.00 | 16.00 | 4.800 |
| 70.0 | 70.0 | 70.0 | 14.00 | 14.00 | 4.200 |
| 60.0 | 60.0 | 60.0 | 12.00 | 12.00 | 3.600 |
| 50.0 | 50.0 | 50.0 | 10.00 | 10.00 | 3.000 |
| 40.0 | 40.0 | 40.0 | 8.00 | 8.00 | 2.400 |
| 30.0 | 30.0 | 30.0 | 6.00 | 6.00 | 1.800 |
| 20.0 | 20.0 | 20.0 | 4.00 | 4.00 | 1.200 |
| 10.0 | 10.0 | 10.0 | 2.00 | 2.00 | 0.600 |
| 0.0 | 0.0 | 0.0 | 0.00 | 0.00 | 0.000 |

INVENTION

PRIOR ART

MOTOR SPEED (rpm)

0    200    400    600    800    1000    1200

EP 1 871 001 A1

## FIG. 6

## FIG. 7

## INTERNATIONAL SEARCH REPORT

| | International application No. |
|---|---|
| | PCT/JP2006/307680 |

A. CLASSIFICATION OF SUBJECT MATTER
*H02P6/08*(2006.01), *B62D5/04*(2006.01), *H02P21/00*(2006.01), *H02P27/04*
(2006.01)

According to International Patent Classification (IPC) or to both national classification and IPC

B. FIELDS SEARCHED

Minimum documentation searched (classification system followed by classification symbols)
B62D5/04, H02P6/08, H02P21/00, H02P27/04

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-304697 A (Koyo Seiko Co., Ltd.), 24 October, 2003 (24.10.03), Figs. 1, 2 (Family: none) | 1-2 |
| Y | JP 2003-9598 A (Sanken Electric Co., Ltd.), 10 January, 2003 (10.01.03), Fig. 5 (Family: none) | 1-2 |
| Y | JP 2000-358393 A (Toyota Motor Corp.), 26 December, 2000 (26.12.00), Par. Nos. [0040], [0042]; Fig. 4 (Family: none) | 1-2 |

☐ Further documents are listed in the continuation of Box C.   ☐ See patent family annex.

| | |
|---|---|
| *      Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>29 June, 2006 (29.06.06) | Date of mailing of the international search report<br>11 July, 2006 (11.07.06) |
|---|---|
| Name and mailing address of the ISA/<br>Japanese Patent Office | Authorized officer |
| Facsimile No. | Telephone No. |

Form PCT/ISA/210 (second sheet) (April 2005)

EP 1 871 001 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003304697 A